Europäisches Patentamt

European Patent Office

Office européen des brevets

(19)

(11) **EP 0 734 305 B1**

(12) **EUROPÄISCHE PATENTSCHRIFT**

(45) Veröffentlichungstag und Bekanntmachung des Hinweises auf die Patenterteilung:
**05.08.1998 Patentblatt 1998/32**

(21) Anmeldenummer: **95903274.9**

(22) Anmeldetag: **24.11.1994**

(51) Int. Cl.$^6$: **B23Q 17/09**, B23Q 17/24, G01B 11/26

(86) Internationale Anmeldenummer:
**PCT/EP94/03884**

(87) Internationale Veröffentlichungsnummer:
**WO 95/16543 (22.06.1995 Gazette 1995/26)**

(54) **VERFAHREN ZUM EINSTELLEN VON REIBAHLEN UND DERGLEICHEN**

METHOD FOR ADJUSTING REAMERS AND SIMILAR EQUIPMENT

PROCEDE POUR LE REGLAGE D'ALESOIRS ET OUTILS ANALOGUES

(84) Benannte Vertragsstaaten:
**DE FR GB IT SE**

(30) Priorität: **18.12.1993 DE 4343404**

(43) Veröffentlichungstag der Anmeldung:
**02.10.1996 Patentblatt 1996/40**

(73) Patentinhaber:
**GILDEMEISTER - DEVLIEG SYSTEM-WERKZEUGE GMBH**
**D-33689 Bielefeld (DE)**

(72) Erfinder: **SCHÜRFELD, Horst**
**D-33605 Bielefeld (DE)**

(74) Vertreter:
**TER MEER STEINMEISTER & PARTNER GbR**
**Artur-Ladebeck-Strasse 51**
**33617 Bielefeld (DE)**

(56) Entgegenhaltungen:
**DE-A- 3 824 603          DE-B- 2 138 366**
**FR-A- 1 379 930**

- **PATENT ABSTRACTS OF JAPAN vol. 13, no. 432 (M-874) (3780) 27. September 1989 & JP,A,01 164 539 (MATSUSHITA) 28. Juni 1989**

**Beschreibung**

Die Erfindung betrifft ein Verfahren zum Einstellen des Durchmessers von Reibahlen und dergleichen Schneidwerkzeuge, mit den Merkmalen des Oberbegriffs des Anspruchs 1.

In der zerspanenden Bearbeitung werden zur Herstellung von präzisen Bohrungen mit engen Fertigungstoleranzen spezielle Schneidwerkzeuge, zumeist sogenannte Reibahlen eingesetzt, deren Schneidmesser austauschbar und einstellbar an einem Schaft befestigt ist. Diese Schneidmesser müssen nach einem Wechsel und vor jedem erneuten Einsatz auf ein vorgegebenes Durchmessermaß eingestellt werden. Zumeist sind die Schneidmesser auch entgegen der Vorschubrichtung zur Vermeidung eines Materialstaus beim Schneideingang leicht radial nach innen geneigt. Die Einstellung der Schneidmesser erfolgt mit Hilfe von am Werkzeugschaft vorgesehenen Stellschrauben oder dergleichen, und zur Festlegung des Schneidmessers ist wenigstens eine Klemmschraube vorgesehen.

Es sind verschiedene mechanische Meßeinrichtungen bekannt, die mit Hilfe von Meßtastern und Meßuhren den wirksamen Durchmesser von Reibahlen und den erwähnten Neigungswinkel des Schneidmessers mit hoher Genauigkeit erfassen können. Die mechanische Messung hat jedoch den Nachteil, daß das empfindliche Schneidmesser durch die mechanische Berührung beschädigt werden kann. Andererseits ist die Handhabung von mechanischen Meßtastern und Meßuhren angesichts der zumeist bestehenden räumlichen Enge außerordentlich schwierig und zeitaufwendig. Ebenso ist das Umrüsten auf andere Werkzeuggrößen sehr zeitaufwendig.

Ein weiteres bekanntes Verfahren, auf dem der Oberbegriff des Anspruchs 1 basiert, zur Einstellung der Schneidwerkzeuge, auf dem die vorliegende Erfindung aufbaut, bedient sich einer Einrichtung mit zwei Koordinatenschlitten. auf denen einerseits das Werkzeug und andererseits eine Kamera montiert ist. Durch Verstellung der Schlitten wird die durch die Schneidkante des Werkzeugs bestimmte Durchmesserebene in die Fokus-Ebene der Kamera gebracht. Nacheinander wird nun einerseits die Schneidkante und zum anderen die auf dem Schaft gegenüberliegende Fuhrungslinie auf einem mit der Kamera verbundenen Monitor in eine vorgegebene Bezugsposition zur Kamera gebracht und der Verfahrweg zwischen der Schneidkante und der Führungslinie wird über präzise Maßstäbe festgestellt. Dieser Verfahrweg entspricht dem effektiven Durchmesser des Schneidwerkzeugs. Auch der Einstellvorgang kann auf dem Monitor verfolgt werden, bis das Sollmaß erreicht ist. Der Nachteil dieser Lösung besteht darin, daß jeweils nur ein Meßpunkt mit der Kamera erfaßt werden kann und der nächste Meßpunkt jeweils das Verfahren des Koordinaten- oder Meßschlittens erfordert, so daß unter Umständen mehrfach hin- und hergefahren werden muß, bis sowohl der gewünschte Durchmesser als auch der gewünschte Neigungswinkel der Schneidkante erreicht ist. Wegen der Notwendigkeit des wiederholten Hin- und Herfahrens ergibt sich nicht nur ein relativ hoher Zeitaufwand für den Einstellvorgang, sondern es kann auch zu Ungenauigkeiten kommen.

Es ist daher Aufgabe der Erfindung, das gattungsgemäße Verfahren und eine gattungsgemäße. mit einer Kamera und einem Monitor ausgerüstete Meßvorrichtung zur Durchführung des Verfahrens derart fortzubilden, daß der Meßvorgang in relativ einfacher Weise mit hoher Genauigkeit durchgeführt werden kann.

Diese Aufgabe wird erfindungsgemäß durch ein Verfahren mit den Merkmalen des Anspruchs 1 gelöst

Es ist also nur erforderlich, die rückseitige Führungslinie am Schaft mit der Kamera zu erfassen und gewissermaßen auf Null zu setzen und sodann unter gleichzeitiger Ermittlung des Verfahrweges die Schneidkante In die entsprechende Position auf dem Monitor zu bringen. Zusätzliches Hin- und Herfahren ist nicht notwendig. Der Neigungswinkel der Schneidkante wird mit Hilfe der Kamera erfaßt und durch den Rechner über die tan-Funktion umgerechnet in einen Durchmesser, der sich im Abstand von dem für die Bohrungsgröße maßgeblichen Durchmesser des Werkzeugs befindet. Beide Durchmessermaße können in den Monitor eingeblendet und während des Einstellvorganges verfolgt werden, bis die jeweiligen Sollmaße erreicht sind.

Vor Durchführung des eigentlichen Meßvorganges wird zunächst die durch das Schneidmesser bestimmte Durchmesserebene In die Fokus-Ebene der Kamera gebracht, indem das Werkzeug mit Hilfe des dieses aufnehmenden Koordinatenschlitten verfahren und im Koordinatenschlitten gedreht wird, bis ein scharfes Bild des Durchmessers auf dem Monitor erscheint. Da Kameras der vorliegenden Art eine sehr geringe Tiefenschärfe aufweisen, sind selbst geringe Verkantungen sichtbar. Wenn die gewünschte Position in der Brennebene erreicht ist, wird der das Werkzeug tragende Koordinatenschlitten festgesetzt. Die anschließenden Verfahr-Vorgänge werden mit Hilfe des die Kamera aufnehmenden Koordinatenschlittens, im vorliegenden Zusammenhang auch Meßschlitten genannt, durchgeführt. Es ist allerdings auch möglich, den Meßschlitten mit der Kamera festzusetzen und die Verfahr-Vorgänge mit Hilfe des Koordinatenschlittens des Werkzeugs durchzuführen.

In der Praxis kann der Fall eintreten, daß der Schaft des Werkzeugs nicht vollständig gerade in der Werkzeugaufnahme steht. Das wurde dazu führen, daß bei dem Meßvorgang nicht der exakte Durchmesser, sondern ein etwas längeres, schräg durch den Schaft verlaufendes Maß ermittelt würde. Vorzugsweise ist daher zusätzlich der Schritt vorgesehen, daß die Kamera zugleich mit dem Erfassen der Position (Pos. II) der rückwärtigen Führungslinie des Schaftes eine etwaige Neigung dieser Führungslinie erfaßt, und daß der ermittelte Nelgungswinkel bei der anschließenden Ermittlung des Verfahrweges über eine cos-Funktion zur Rückrechnung des gemessenen Verfahrweges verwendet wird.

Im folgenden sollen Auführungsbeispiele der Erfindung anhand der beigefügten Zeichnungen näher erläutert werden.

Fig. 1    ist eine Ansicht eines eingestellten Schneidwerkzeugs mit einem Schaft, einem Schneidmesser, zwei Stellschrauben und einer Klemmschraube;

Fig. 2    ist ein Schnitt entlang der Linie 2-2 in Fig. 1;

Fig. 3    zeigt das Kamerabild des Schneidmessers mit der Meßposition I;

Fig. 4    zeigt das Kamerabild der rückwärtigen Führungslinie des Schaftes mit dem Meßpunkt II;

Fig. 5    veranschaulicht in vergrößerter Darstellung die Neigung des Schneidmessers.

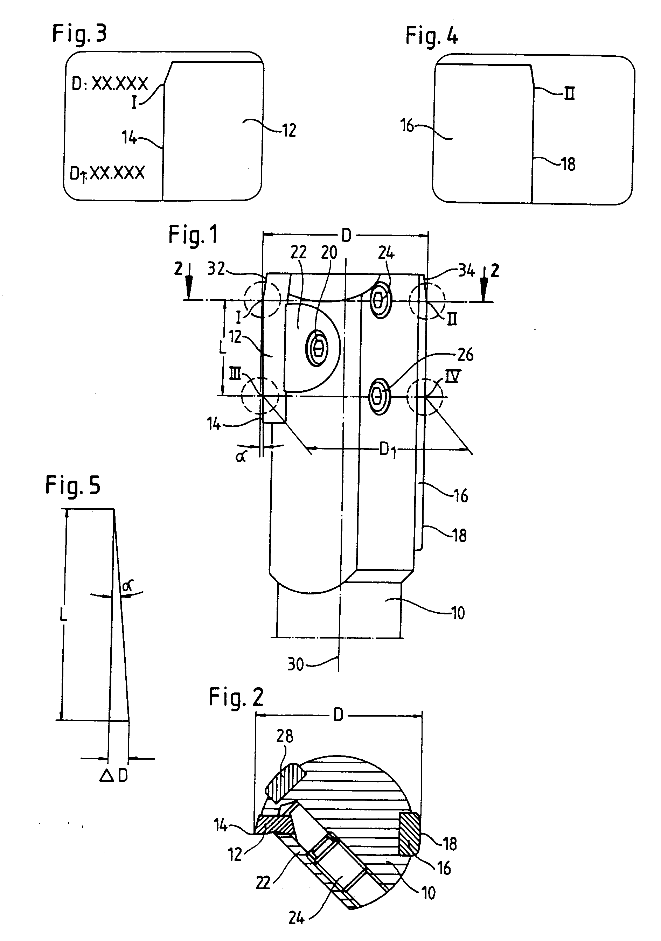

In Fig. 1 ist ein Schaft 10 eines einzustellenden Schneidwerkzeugs dargestellt an dem ein Schneidmesser 12 befestigt ist. Wie insbesondere aus Fig. 2 hervorgeht, befindet sich diametral gegenüber der mit 14 bezeichneten Schneidkante des Schneidmessers eine teilweise in den Schaft 10 eingelassene` entlang einer Mantellinie des Schafts verlaufende Führungsleiste 16, deren Scheitellinie genau der Schneidkante 14 gegenüberliegt und im vorliegenden Zusammenhang als Führungslinie 18 bezeichnet werden soll.

Das Schneidmesser 12 wird mit Hilfe einer Klemmschraube 20 und einer Klemmplatte 22 am Schaft gehalten. Zwei Stellschrauben 24 und 26 ermöglichen nach dem Lösen der Klemmschraube 20 eine Verschiebung des Schneidmessers 12 nach recht und links in Fig. 1 und 2 und, da sie in Abstand übereinanderliegen, auch eine Neigungsverstellung des Schneidmessers 12 in bezug auf die Senkrechte in Fig. 1.

Zum Auffangen der in Umfangsrichtung auf den Schaft durch das Schneidmesser 12 ausgeübten Reaktionskräfte ist in Drehrichtung hinter dem Schneidwerkzeug 12 eine weitere Führungsleiste 28 vorgesehen, die jedoch im vorliegenden Zusammenhang ohne Bedeutung ist.

Wie aus Fig. 1 hervorgeht, verläuft die Schneidkante 14 nicht genau parallel zur Drehachse 30 des Schafts 10. Vielmehr ist zunächst am oberen Ende in Fig, 1 ein nach oben verjüngter Abschnitt 32 vorgesehen, der den Eintritt in eine Bohrung erleichtert. Dieser Abschnitt endet in einer Position I, die in der Schnittebene 2-2 der Fig. 2 liegt. Von hier aus läuft die Schneidkante 14 im weiteren Verlauf leicht mit einem sehr spitzen Winkel $\alpha$ (Fig. 5) zur Drehachse 30 zurück. Auch die Führungsleiste 18 weist einen oberen Abschnitt 34 auf, der zum oberen Ende des Werkzeugs hin verjüngt ist, und erst an dem mit II bezeichneten Punkt, der ebenfalls in der Schnittebene 2-2 liegt, erreicht die Führungsleiste 16 das für den Durchmesser bestimmende Maß. Der in der Schnittebene 2-2 genommene Durchmesser D ist daher der effektive, für die Bohrlochgröße bestimmende Durchmesser des Werkzeugs.

Für einen Bearbeitungsvorgang wird in der Regel nicht nur dieser Durchmesser D, sondern auch der Neigungswinkel $\alpha$ vorgegeben, durch den ein über-mäßiger Materialstau und Reaktionsdruck in den zurückliegenden Bereichen der Schneidkante vermieden werden. Neben dem Durchmesser D muß daher bei einem Einstellvorgang auch der Neigungswinkel $\alpha$ eingestellt werden. Dies geschieht nicht direkt durch Winkeleinstellung, sondern dadurch, daß in einem Abstand L parallel zur Drehachse des Schafts 10 ein weiterer Durchmesser D1 ermittelt bzw. bestimmt wird, der unter Verwendung der tan-Funktion des Winkels $\alpha$ nach folgenden Beziehungen berechnet wird.

$$D1 = D - \Delta D$$

$$\Delta D = L \cdot \tan \alpha$$

Die Umrechnung des Winkels $\alpha$ in einen Durchmesser D1 berücksichtigt die Gegebenheiten der Praxis. Theoretisch wäre es auch möglich, den Neigungswinkel $\alpha$ direkt anzuzeigen und einzustellen. Da es sich um einen sehr kleinen Winkel handelt, wäre dies wenig anschaulich. In der Praxis ist es daher bei weitem vorzuziehen, wenn die Neigung durch Längenmaße definiert wird, hier also der Abstand L zwischen den Positionen der beiden Durchmesser D und D1, und die Längenänderung des Durchmessers über die Strecke L vom Wert D auf D1.

Im dargestellten Beispiel verläuft die Ebene des Durchmessers D1 durch die untere Stellschraube 26, so daß eine Drehung dieser unteren Stellschraube 26 unmittelbar eine Verstellung des Durchmessers D1 bewirkt. Die Position der Schneidkante 14 in der durch den Durchmesser D1 bzw. die untere Stellschraube 26 bestimmten Ebene ist mit III in Fig. 1 bezeichnet worden.

Nunmehr soll die Durchführung des Verfahrens im einzelnen erläutert werden.

Zunächst wird die nicht dargestellte Kamera mit dem zugehörigen Koordinatenschlitten auf den Meßpunkt I an der Schneidkante verfahren. Die genaue Fokussierung des Schneidmessers 12 zur Fokus-Ebene der Kamera wird überprüft bzw. dadurch hergestellt, daß das Werkzeug in der Werkzeugaufnahme gedreht bzw. mit dem zugehörigen Koordinatenschlitten verfahren wird. Sobald ein scharfes Bild des Schneidmessers 12 bzw. des Kantenbereichs des Schneidmessers hergestellt ist, kann davon ausgegangen werden, daß der gesuchte Durchmesser D (Einstelldurchmesser) in der Fokus-Ebene der Kamera liegt. Auf dem mit der Kamera verbundenen Monitor erscheint das in Fig. 3 gezeigte Bild des Schneidmessers.

Nunmehr werden der Werkzeugschlitten und die Werkzeugaufnahme festgesetzt, so daß die gefundene Werkzeugposition beibehalten wird. Der ebenfalls nicht dargestellte Koordinatenschlitten (Meßschlitten), der die Kamera aufnimmt, wird zur rechts in Fig. 1 und 2 liegenden Rückseite des Werkzeugs verfahren, bis die Führungslinie 18 erfaßt wird. Auf dem Monitor erscheint das in Fig. 4 gezeigte Bild. Die Position der Kamera wird in bezug auf die Führungslinie 18 auf "Null gesetzt". also beispielsweise so verfahren, daß die Führungslinie 18 mit einer auf dem Monitor vorgesehenen Markierung zusammentrifft. Die jetzt gefundene Position bildet den Ausgangspunkt für die anschließende Messung des Durchmessers D.

Zu diesem Zweck wird der die Kamera tragende Meßschlitten zurück in die in Fig. 3 gezeigte Position verfahren, in der wiederum die Meßposition I aufgenommen wird. Der zwischen der Meßposition II (Fig. 4) und I (Fig. 3) zurückgelegte Verfahrweg entspricht exakt dem derzeitigen effektiven Durchmesser des Werkzeugs. Die Verfahrstrecke, d.h. der Durchmesser D Ist links oben in den Monitor gemäß Fig. 3 eingeblendet. Während des Jetzt folgenden Einstellvorganges bleibt die Kamera auf das Schneidmesser gerichtet, und es erscheint weiterhin das in Fig. 3 gezeigte Bild auf dem Monitor. Die Änderingen der Werte von D und D1 während des Einstellvorganges können daher laufend auf dem Monitor verfolgt werden. Durch Drehen der Stellschrauben 24,26 kann das gewünschte Durchmessermaß D hergestellt werden.

Zugleich soll aber der oben erläuterte Durchmesser D1 entsprechend dem Neigungswinkel $\alpha$ der Schneidkante eingestellt werden. Zu diesem Zweck erfaßt die Kamera den Neigungswinkel $\alpha$ der Schneidkante, und dieser wird nach den oben angegebenen Gleichungen in den gewünschten Durchmesser D1 umgerechnet. Der jeweilige Wert von D1 wird unten links in das Monitorbild gemäß Fig. 3 eingeblendet. Wenn durch Betätigung der Stellschrauben 24,26 sowohl das Maß von D als auch das Maß von D1 so verändert werden, daß auf dem Monitor die entsprechenden vorgegebenen Werte erscheinen, ist der Einstellvorgang beendet. Das Schneidmesser wird mit Hilfe der Klemmschraube 20 festgelegt.

Es ist daher insgesamt nur ein Verfahrweg von der Position II zu der Position I notwendig. Die Einstellung der Position III (Durchmesser D1) wird erreicht, ohne daß der Schlitten der Kamera erneut verfahren werden muß. Insbesondere ist es nicht notwendig, wiederholt zwischen den Punkten I, II und III hin- und herzufahren, wie es beim Stand der Technik der Fall ist, so daß der damit verbundene Zeitaufwand und die dadurch hervorgerufenen Ungenauigkeiten entfallen.

Die geschilderte Verfahrensweise setzt allerdings voraus, daß der Schaft 10 vollständig gerade in der Werkzeugaufnahme gehalten ist. In der Praxis ist es jedoch durchaus häufig, daß entweder die Werkzeugaufnahme oder der Werkzeugschaft aufgrund vorangegangener Belastungen einen Schlag aufweisen. In diesem Falle ermittelt die Kamera in der Position II auf der Rückseite des Schaftes die Neigung des Schaftes, und der Rechner rechnet den Verfahrweg zwischen den Punkten II und I entsprechend einer geeigneten Winkelfunktion dieses Winkels zurück. Entsprechendes gilt auch für die Ermittlung des Durchmessers D1.

Der besondere Vorteil der Erfindung besteht darin, daß nach der Rückkehr der Kamera in die Position I der Schneidkante sowohl der Durchmesser D als auch der Durchmesser D1 ohne weitere Fahrbewegungen der Kamera eingestellt werden können und daß die Schneidkante mit der Position I während dessen stets auf dem Monitor sichtbar bleibt. Auch nach der Beendigung des Einstellvorganges und dem Festziehen der Klemmschraube 20 kann noch einmal eine abschließende Überprüfung ohne Verfahrbewegung durchgeführt werden, oder eine Verschiebung der Werte durch Festziehen der Klemmschraube kann korrigiert werden.

Wenn die zwischen dem Durchmesser D und dem Durchmesser D1 verlaufende Kante des Schneidmessers keine Gerade bildet und somit als Neigung $\alpha$ der Schneidkante nicht sicher über die Kamera erfaßt wird, erfolgt zusätzlich vor dem Anfahren der Meßpunkte II und I ein Anfahren der Meßpunkte III und IV zur Feststellung des aktuellen Durchmessers D1. Die zwischen D1 und D ermittelte Differenz wird als Neigung festgestellt und als eine gerade Schneidkante interpoliert. Damit ist es möglich. auch bei balligen und konkaven Schneidkanten den effektiven Durchmesser D und den die Neigung des Schneidmessers bestimmenden Durchmesser D1 in der zuvor beschriebenen Weise einzustellen.

**Patentansprüche**

1. Verfahren zum Einstellen des Durchmessers von Reibahlen und dergleichen Schneidwerkzeuge, bei dem die Reibahle in eine auf einem Koordinatenschlitten montierte Werkzeugaufnahme eingespannt und mit Hilfe einer mit einer Kamera versehenen, mit einem Meßschlitten verfahrbaren Meßeinrichtung hinsichtlich des in die Fokus-Ebene gebrachten Durchmessers (D) zwischen der Schneidkante (14) und der gegenüberliegenden Führungslinie (18) des Schaftes (10) sowie der Neigung ($\alpha$) der Schneidkante (14) vermessen wird, indem die einzelnen Meßpunkte (I,II) durch die Kamera erfaßt und die Verfahrwege des Meßschlittens zwischen den Meßpunkten (II,I) ermittelt werden und das Schneidmesser (12) entsprechend dem Meßergebnis eingestellt wird, wobei zunächst die der Schneidkante (14) gegenüberliegende Führungslinie (18) der Reibahle mit der Kamera erfaßt und als Bezugsposition (Pos. II) festgehalten wird, wobei die Kamera aufnehmende Meßschlitten sodann verfahren wird, bis die den Durchmesser (D) bestimmende Position (Pos. I) der Schneidkante (14) von der Kamera erfaßt wird, wobei der von dem Meßschlitten zwischen den beiden Meßpositionen (II,I) zurückgelegte Weg festgestellt wird, und wobei der effektive Durchmesser (D) und der die Neigung des Schneidmessers bestimmende Durchmesser (D1) auf die vorgegebenen Werte eingestellt werden, dadurch **gekennzeichnet**, daß die Neigung ($\alpha$) der Schneidkante (14) gegen die senkrechte oder eine entsprechende achsparallele Linie über die Kamera erfaßt und durch einen mit dieser verbundenen Rechner in einen Durchmesser (D1) in einer auf der Schneidkante (14) versetzten Position (Pos. III) umgerechnet wird.

2. Verfahren nach Anspruch 1, dadurch **gekennzeichnet,** daß zuvor die den effektiven Durchmesser (D) des Werkzeugs bestimmende Ebene dadurch in die Fokus-Ebene der Kamera gebracht wird, daß das Werkzeug bzw. die Kamera derart zueinander verschoben und gedreht werden, daß das Schneidmesser (12) scharf abgebildet wird.

3. Verfahren nach Anspruch 1 oder 2, dadurch **gekennzeichnet**, daß die Kamera beim Erfassen der rückwärtigen Führungslinie (18) des Schaftes eine etwaige Neigung des Schaftes in bezug auf den zugehörigen Koordinatenschlitten feststellt, und daß ggfs. der zwischen den Meßpositionen (Pos. II, Pos. I) zurückgelegte Verfahrweg zur genauen Bestimmung des effektiven Durchmessers (D) unter Berücksichtigung der Winkelfunktionen des Neigungswinkels zurückgerechnet wird.

4. Verfahren nach einem der vorhergehenden Ansprüche, dadurch **gekennzeichnet**, daß vor dem Anfahren der Meßpunkte (II) und (I) ein Anfahren der Meßpunkte (III) und (IV) zur Feststellung des aktuellen Durchmessers (D1) erfolgt.

## Claims

1. Method for adjusting the diameter of reamers and similar cutting tools, in which the reamer is clamped in a tool holder mounted on a coordinate slide and, by means of a measuring device provided with a camera and movable by means of a measuring slide, is measured in respect of the diameter (D) brought into the focal plane between the cutting edge (14) and the opposite guide line (18) of the shank (10) and in respect of the inclination ($\alpha$) of the cutting edge (14), in that the individual measuring points (I, II) are recorded by the camera and the traverse paths of the measuring slide between the measuring points (II, I ) are determined and the cutting blade (12) is adjusted corresponding to the measurement result, wherein first of all the guide line (18) of the reamer lying opposite the cutting edge (14) is recorded by the camera and retained as reference position (Pos. II), wherein the measuring slide carrying the camera is then moved until the position (Pos. I) of the cutting edge (14) determining the diameter (D) is recorded by the camera, wherein the path covered by the measuring slide between the two measuring positions (II, I) is ascertained, and wherein the effective diameter (D) and the diameter (D1) determining the inclination of the cutting blade are adjusted to the pre-set values, characterised in that the inclination ($\alpha$) of the cutting edge (14) to the perpendicular or a corresponding axially parallel line is recorded <u>via</u> the camera and is converted by a computer connected thereto into a diameter (D1) in a position (Pos. III) displaced on the cutting edge (14).

2. Method according to claim 1, characterised in that first of all the plane determining the effective diameter (D) of the tool is brought into the focal plane of the camera by displacing and rotating the tool and the camera respectively with respect to one another in such a manner that the cutting blade (12) is sharply projected.

3. Method according to claim 1 or 2, characterised in that, as the rear guide line (18) of the shank is being recorded, the camera ascertains any inclination of the shank in relation to the associated co-ordinate slide, and, if appropriate, the traverse path covered between the measuring positions (Pos. II, Pos. I), for accurate determination of the effective diameter (D), is recalculated taking into account the angular functions of the angle of inclination.

4. Method according to one of the preceding claims, characterised in that, before approach to the measuring points (II) and (I), an approach to the measuring points (III) and (IV) is effected to determine the actual diameter (D1).

## Revendications

1. Procédé de réglage du diamètre d'alésoirs et d'outils coupants analogues, dans lequel l'alésoir est serré dans un mandrin porte-outil monté sur un chariot à mouvements rectangulaires et est soumis, à l'aide d'un dispositif de mesure muni d'une caméra et monté mobile sur un chariot de mesure, à un contrôle dimensionnel qui porte sur le diamètre (D) amené dans le plan focal et compris entre l'arête de coupe (14) et la ligne de guidage opposée (18) de la queue (10) et sur l'inclinaison ($\alpha$) de l'arête de coupe (14) et qui consiste à balayer, à l'aide de la caméra, les points de mesure individuels (I, II), à enregistrer les courses de déplacement du chariot de mesure entre les points de mesure (II, I) et à régler la lame (12) en fonction du résultat de la mesure, la ligne de guidage (18) de l'alésoir située à l'opposé de l'arête de coupe (14) étant balayée en premier par la caméra et conservée comme position de référence (pos. II), le chariot de mesure portant la caméra étant ensuite déplacé jusqu'à ce que la position (pos. I) de l'arête de coupe (14), déterminante pour le diamètre (D), soit balayée par la caméra, la course parcourue par le chariot de mesure entre les deux positions de mesure (II, I) étant relevée, et le diamètre effectif (D) et le diamètre (D1) déterminant l'inclinaison de la lame étant réglés en fonction des valeurs prédéfinies, caractérisé en ce que l'inclinaison ($\alpha$) de l'arête de coupe (14) par rapport à la verticale ou à une ligne correspondante parallèle axialement est enregistrée par la caméra et convertie, par un calculateur connecté à celle-ci, en un diamètre (D1) en un point (pos. III) décalé sur l'arête de coupe (14).

2. Procédé selon la revendication 1, caractérisé en ce que le plan déterminant le diamètre effectif (D) de l'outil est préalablement amené dans le plan focal de la caméra par le fait que l'outil et la caméra sont déplacés et tournés l'un par rapport à l'autre, de façon à obtenir une image nette de la lame (12).

3. Procédé selon la revendication 1 ou 2, caractérisé en ce qu'en étant braquée sur la ligne de guidage arrière (18) de la queue la caméra constate une inclinaison éventuelle de la queue par rapport au chariot associé à mouvements rectangulaires, et en ce que, pour déterminer avec précision le diamètre effectif (D), la course de déplacement parcourue entre les positions de mesure (pos. II, pos. I) est éventuellement recalculée en tenant compte des fonctions angulaires de l'angle d'inclinaison.

4. Procédé selon une des revendications précédentes, caractérisé en ce que, pour connaître le diamètre réel (D1), les )oints de mesure (III) et (IV) sont traités avant les points de mesure (II) et (I).

Fig. 3

D: XX.XXX

I

14

D₁: XX.XXX

12

Fig. 4

II

16

18

Fig. 1

D

2

32    22  20    24    34    2

I

L    12

III

IV

14

α

D₁

16

18

10

30

Fig. 5

α

L

ΔD

Fig. 2

D

28

14

12

22

24

18

16

10